# EUROPEAN PATENT SPECIFICATION

(11) **EP 2 393 573 B1**
(45) Date of publication and mention of the grant of the patent: **21.12.2016**
(21) Application number: 09788153.6
(22) Date of filing: 01.09.2009
(51) Int. Cl.: B01D 41/04

(54) **FILTER CLEANING DEVICE**
FILTERREINIGUNGSVORRICHTUNG
DISPOSITIF DE NETTOYAGE DE FILTRE

(30) Priority: 14.08.2008 NL 2001890
(43) Date of publication of application: 14.12.2011
(73) Proprietor: Toussaint, Perry, 3223 TE Hellevoetsluis (NL)
(72) Inventor: Toussaint, Perry, 3223 TE Hellevoetsluis (NL)
(74) Representative: Verhees, Godefridus Josephus Maria
(86) International application number: PCT/NL2009/000168
(87) International publication number: WO 2010/019031

(56) References cited:
- DE-A1- 10 151 059
- FR-A1- 2 519 566
- IL-A- 78 150

## Description

### Field of the invention.

The invention relates to a filter cleaning device comprising a support on which a filter can be mounted, and a spindle for rotating the filter, the device further including a nozzle with a nozzle opening which is directed at the filter when a filter is mounted on the support, which support is threaded and disposed on the spindle and can be rotated around the spindle and when rotated is displaced along the spindle. The invention more particularly relates to a device for cleaning a cartridge filter which is frequently used in a bubble bath and/or massage bath, in a swimming pool or in a pond.

### State of the art.

A device of this type is known from DE-A-10151059. This known device has a spindle which can be rotated by an electric motor and which is present outside the housing of the filter cleaning device. A threaded support is present on the spindle and moves along the spindle when the spindle is rotated. A filter to be cleaned is suspended at this support and rotated by the same electric motor via a belt.

### Summary of the invention.

It is an object of the invention to improve the known device. For this purpose the device according to the invention is characterised in that the spindle and the support are inside the housing and the filter can be mounted on the support, and in that the nozzle opening, seen in axial direction of the spindle, is directed beside the spindle. The filter to be cleaned is to be mounted on the support and a water hose is to be connected to the nozzle. As a result of gravity and/or as a result of the force of the water jet the filter starts rotating around the spindle off centre of the filter and then moves along the spindle during which operation all parts of the filter move past the water jet. As a consequence of centrifugal force the water is slung away from the filter, so that the dirt is discharged extra well indeed. By means of the device according to the invention a filter is cleaned in a brief period of time and with less water than when the filter is cleaned by hosing it down. So the water jet is not directed at the centre of the filter, but off centre of the filter. As a result of this the water jet will cause the filter to rotate around the spindle.

It is noticed that from FR-A-2519566 a filter cleaning device is known having a nozzle with a nozzle opening which, as seen in axial direction of the spindle, is directed beside the spindle to rotate the filter around the spindle. However, the axial movement of the filter with respect to the nozzle is caused in this known device by a float supporting the filter.

For a better cleaning of the filter a further embodiment of the device according to the invention is characterised in that the device further includes a further nozzle with a further nozzle opening which, seen in axial direction of the spinde, is directed beside the spindle, the spindle, seen in a direction at right angles to the spindle, being disposed in between the two nozzles. By first connecting the water hose to the one nozzle, the filter will turn one way and will move for example from bottom to top along the spindle. By subsequently connecting the water hose to the other nozzle, the filter will turn the other way and will move from top to bottom. As a result, the filter will be hosed down twice and the support will have returned to its initial position at the end of the cleaning operation.

In order not to spray the dirt into the filter, but just away from the filter, the nozzle is preferably directed at an angle to the longitudinal direction of the spindle.

Preferably, the nozzle opening of the further nozzle is directed at a further angle to the longitudinal direction of the spindle with the nozzle openings of the nozzles being directed away from each other.

A still further embodiment of the device according to the invention is characterised in that the device comprises a housing which is open at the top and is covered by a cover and at the bottom has a discharge opening, the spindle being attached to the bottom of the housing and the nozzles being installed in the side wall of the housing. As a result, the device can be used indoors, so that it is no longer necessary to carry out the filter cleaning operation out of doors in the cold.

### Brief description of the drawing figure.

The invention will be further described below in more detail with reference to an embodiment of the device according to the invention represented in the drawing figures, in which:
Fig. 1 shows a longitudinal section of an embodiment of the device according to the invention; and
Fig. 2 shows a cross section of the device.

### Detailed description of the drawing figures.

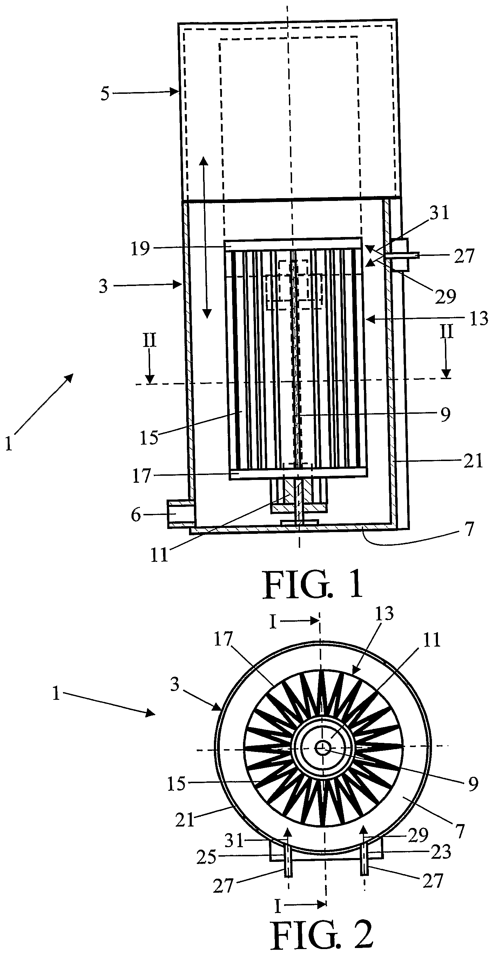

Figs. 1 and 2 show a longitudinal section and a cross section respectively of an embodiment of the device for cleaning filters. The device 1 has a cylindrical housing 3 which is open at the top and is closed by a cover 5 and at the bottom has a discharge opening 6. At the bottom 7 of the housing is mounted a spindle 9 around which an internally threaded support 11 can be turned which moves along the spindle when turning. The support carries a filter 13. The filter is a filter comprising a zigzag-shaped filter plate 15 installed in a circle and at the axial ends is enclosed between a plate 17 and an annulus 19.

There are two nozzles 23 and 25 installed in the cylinder wall 21 of the device 1. Each nozzle has a connecting piece 27 to which a water hose can be connected. For hosing down the filter 13 the nozzle openings of the nozzles 23 and 25 are installed at a 60 degree angle to the longitudinal direction of the spindle 9 (see Fig. 1). As a consequence of this the water jets 29 and 31 leaving the nozzles are directed upwards and downwards with the nozzle opening 29 of nozzle 23 being directed 30 degrees downwards and the nozzle opening 31 of the nozzle 25 being directed 30 degrees upwards. The angle of the nozzles is chosen such that in the top position of the filter the water jet 29 active thus far no longer hits the filter (as a result of the speed the filter has turned just a little further so that it is out of reach of the water jet). In this top position the water jet 31 is directed at the filter after the hose has been connected to the nozzle 25, so that the filter is again turned downwards.

For having the water jet rotate the filter 13 rotate, the nozzle openings 29, 31, seen in axial direction of the spindle, are directed at the filter beside the spindle 9 (see Fig. 2).

For cleaning a filter 13, the filter is to be placed onto the carrier 11 and a water hose is first to be connected to nozzle 23. As a result of the force of the water jet 29 the filter 13 starts rotating around the spindle while the filter moves upwards along the spindle 9 in a rotating fashion (the filters are to be cleaned from top to bottom) as far as the position indicated in the drawing Fig. 1 by means of broken lines. All parts of the filter then pass by the water jet during this operation. Then the water hose is connected to nozzle 25 as a result of which the filter will move downwards in rotating fashion. Now the filter is hosed down a second time and the carrier 11 will return to its initial position.

## Claims

1. A filter cleaning device (1) comprising a housing (3), a spindle (9) for rotating a filter (13), a nozzle (23) installed in a wall (21) of the housing with a nozzle opening (29) which is directed at the filter when a filter is present inside the housing, and a support (11) which is threaded and disposed on the spindle (9) and can be rotated around the spindle and when rotated is displaced along the spindle, **characterised in that** the spindle (9) and the support (11) are inside the housing and the filter (13) can be mounted on the support, and **in that** the nozzle opening (29), seen in axial direction of the spindle (9), is directed beside the spindle, so that, as a result of the force of water jet out of the nozzle, the filter rotates around the spindle.

2. A device (1) as claimed in claim 1, **characterised in that** the device further includes a further nozzle (25) with a further nozzle opening (31) which, seen in axial direction of the spindle, is directed beside the spindle, the spindle (9), seen in a direction at right angles to the spindle, being disposed in between the two nozzles (23, 25).

3. A device (1) as claimed in claim 1 or 2, **characterised in that** the nozzle opening (29) is directed at an angle to the longitudinal direction of the spindle (9).

4. A device (1) as claimed in claims 2 and 3, **characterised in that** the nozzle opening (31) of the further nozzle (25) is directed at a further angle to the longitudinal direction of the spindle (9) with the nozzle openings (29, 31) of the nozzles (23, 25) being directed away from each other.

5. A device (1) as claimed in any one of the preceding claims, **characterised in that** the device comprises a housing (3) which is open at the top and is closed by a cover (5) and at the bottom (7) has a discharge opening while the spindle (9) is attached to the bottom of the housing and the nozzles (23, 25) are installed in the side wall (21) of the housing.

## Patentansprüche

1. Einrichtung (1) für die Reinigung eines Filters, die ein Gehäuse (3), eine Spindel (9) für die Drehung eines Filters (13) sowie einen in einer Wand (21) des Gehäuses angeordneten Spülkopf (23) mit einer Düsenöffnung (29) umfasst, die, wenn sich ein Filter auf dem Träger befindet, auf den Filter gerichtet ist, und schließlich einen Träger (11), der mit einem Gewinde versehen ist, sich auf der Spindel (9) befindet, darauf drehbar gelagert ist und bei einer Drehung entlang der Spindel verschoben wird, **dadurch gekennzeichnet, dass** die Spindel (9) und der Träger (11) in dem Gehäuse angeordnet sind, der Filter (13) auf dem Träger angebracht werden kann und die Düsenöffnung (29), in Richtung der Längsachse der Spindel (9) gesehen, neben die Spindel gerichtet ist, so dass der Filter durch die Kraft des aus dem Spülkopf austretenden Wasserstrahls um die Spindel rotiert.

2. Einrichtung (1) nach Anspruch 1, **dadurch gekennzeichnet, dass** die Einrichtung ferner einen weiteren Spülkopf (25) mit einer weiteren Düsenöffnung (31) umfasst, die, in Richtung der Längsachse der Spindel (9) gesehen, ebenfalls neben die Spindel gerichtet ist, wobei sich die Spindel (9), im rechten Winkel zur Längsachse der Spindel gesehen, zwischen den beiden Spülköpfen (23, 25) befindet.

3. Einrichtung nach Anspruch 1, **dadurch gekennzeichnet, dass** die Düsenöffnung in einem schrägen Winkel zur Längsachse der Spindel ausgerichtet ist.

4. Einrichtung (1) nach einem der Ansprüche 2 oder 3, **dadurch gekennzeichnet, dass** die Düsenöffnung (31) des weiteren Spülkopfs (25) in einem weiteren schrägen Winkel zur Längsachse der Spindel (9) ausgerichtet ist, wobei die Düsenöffnungen (29, 31) der Spülköpfe (23, 25) auseinanderzeigen.

5. Einrichtung (1) nach einem der vorangegangenen Ansprüche, **dadurch gekennzeichnet, dass** die Einrichtung ein Gehäuse (3) umfasst, das an der Oberseite offen und mit einem Deckel (5) verschlossen und in der Nähe der Unterseite (7) mit einer Ablauföffnung versehen ist, wobei die Spindel (9) an dem Gehäuseboden befestigt ist und die Spülköpfe (23, 25) in der Seitenwand (21) des Gehäuses angeordnet sind.

## Revendications

1. Appareil (1) pour le nettoyage d'un filtre, comprenant un boîtier (3), une broche (9) pour faire pivoter un filtre (13), un injecteur (23) se trouvant dans une paroi (21) du boîtier et ayant une ouverture de buse (29) qui, en présence d'un filtre sur le support, est orientée vers le filtre, et un support (11) pourvu d'un filetage et se trouvant sur la broche (9) et étant articulé sur la broche et, en cas de torsion, se déplaçant le long de la broche, **caractérisé en ce que** la broche (9) et le support (11) se trouvent dans le boîtier et **en ce que** le filtre (13) peut être monté sur le support, et **en ce que** l'ouverture de buse (29), en vue axiale de la broche (9), est orientée près de la broche de façon à ce que, sous la force du jet d'eau venant de l'injecteur, le filtre tourne autour de la broche.

2. Appareil (1) selon la revendication 1, **caractérisé en ce que** l'appareil comprend de plus un injecteur supplémentaire (25) ayant une ouverture de seringue supplémentaire (31) qui, en vue axiale de la broche, est également orientée près de la broche, où la broche (9), en vue perpendiculaire à la broche, se trouve entre les deux injecteurs (23, 25).

3. Appareil selon la revendication 1, **caractérisé en ce que** l'ouverture de seringue est orientée dans une direction faisant un angle avec la direction longitudinale de la broche.

4. Appareil (1) selon la revendication 2 et 3, **caractérisé en ce que** l'ouverture de seringue (31) de l'injecteur supplémentaire (25) est orientée dans une direction faisant un angle supplémentaire avec la direction longitudinale de la broche (9), où les ouvertures de buse (29, 31) des injecteurs (23, 25) sont orientées dans deux directions divergentes.

5. Appareil (1) selon une des revendications précédentes, **caractérisé en ce que** l'appareil comprend un boîtier (3) étant ouvert sur le dessus et étant fermé par un couvercle (5), et étant pourvu d'une ouverture d'évacuation près du côté inférieur (7), où la broche (9) est fixée au fond du boîtier et les injecteurs (23, 25) se trouvent dans la paroi latérale (21) du boîtier.
